# EUROPÄISCHE PATENTSCHRIFT

(11) **EP 0 628 789 B1**
(45) Veröffentlichungstag und Bekanntmachung des Hinweises auf die Patenterteilung: **06.08.1997**
(21) Anmeldenummer: 94108691.0
(22) Anmeldetag: 07.06.1994
(51) Int. Cl.: G01D 5/16

(54) **Positionsmesseinrichtung**
Position sensor
Dispositif de mesure de position

(30) Priorität: 11.06.1993 DE 4319322
(43) Veröffentlichungstag der Anmeldung: 14.12.1994
(73) Patentinhaber: Dr. Johannes Heidenhain GmbH, D-83292 Traunreut (DE)
(72) Erfinder: Müller, Josef, Dipl.-Ing., D-84518 Garching (DE); Spies, Alfons, Dipl.-Ing., D-83358 Seebruck (DE)

(56) Entgegenhaltungen:
- EP-A- 0 032 324
- EP-A- 0 151 002
- EP-A- 0 242 492
- EP-A- 0 478 394
- DE-A- 4 014 885

## Beschreibung

Die Erfindung betrifft eine Positionsmeßeinrichtung gemäß dem Oberbegriff des Anspruches 1.

Eine derartige Positionsmeßeinrichtung wird insbesondere bei einer Bearbeitungsmaschine zur Messung der Relativlage eines Werkzeuges bezüglich eines zu bearbeitenden Werkstückes eingesetzt.

In der EP 0 151 002 B1 ist eine magnetische Positionsmeßeinrichtung zur Messung der Relativlage zweier zueinander beweglicher Objekte beschrieben, bei der eine periodische Meßteilung von einer Abtasteinheit mittels zweier Gruppen aus je vier magnetoresistiven Elementen zur Erzeugung von nullsymmetrischen Ausgangssignalen abgetastet wird. Die vier magnetoresistiven Elemente der beiden Gruppen mit den Ausgangssignalen der Phasenlagen 0° und 180° werden in Form einer Reihenschaltung zu einer ersten Halbbrückenschaltung und die magnetoresistiven Elemente der beiden Gruppen mit den Ausgangssignalen der Phasenlagen 90° und 270° in Form einer Reihenschaltung zu einer zweiten Halbbrückenschaltung verschaltet. An den Mittelabgriffen der beiden Halbbrückenschaltungen stehen zwei nullsymmetrische Ausgangssignale mit einem gegenseitigen Phasenversatz von 90° zur Gewinnung von Positionsmeßwerten in einer nachgeschalteten Auswerteeinrichtung an.

Bei derartigen Meßeinrichtungen ist die Signalamplitude der Ausgangssignale stark vom Abstand zwischen der Meßteilung und der Abtasteinheit abhängig. Diese Änderung der Amplitude erschwert die nachfolgende Interpolation der Ausgangssignale.

In der EP-A 0 242 492 ist die Messung des Abstandes einer Teilscheibe relativ zu einem kapazitiven Sensor beschrieben. Bedingung für eine kapazitative Abstandsmessung ist eine metallische Teilscheibe.

Die DE-A 40 14 885 betrifft einen Drehwinkelaufnehmer mit magnetoresistiven Elementen. Um Schwankungen des Ausgangssignals aufgrund von Temperaturänderungen zu vermeiden, ist eine Brückenschaltung mit einem weiteren magnetoresistiven Element vorgesehen. Ein abstandsabhängiges Signal wird nicht erzeugt.

In der EP-A 0 478 394 sind Maßnahmen beschrieben, mit denen die Form von analogen Abtastsignalen korrigiert wird.

Bei der Positionsmeßeinrichtung gemäß der EP-A 0 032 324 werden die analogen Signale durch Änderung der Verstärkung korrigiert.

Der Erfindung liegt die Aufgabe zugrunde, bei einer Positionsmeßeinrichtung der genannten Gattung mit einfachen Mitteln eine abstandsabhängige Regelgröße zu erzeugen, mit der die Amplitude der Ausgangssignale nachgeregelt werden kann.

Diese Aufgabe wird erfindungsgemäß durch die Merkmale des Anspruches 1 gelöst.

Die mit der Erfindung erzielten Vorteile bestehen insbesondere darin, daß durch eine einfache Sensoranordnung ein von der Meßteilung unmoduliertes Meßsignal erzeugt wird, dessen Signalamplitude vom Abstand zwischen der Abtasteinheit und der Meßteilung abhängig ist. Mit diesem Meßsignal ist eine einfache Regelung der Signalamplitude der positionsabhängigen Ausgangssignale der Positionsmeßeinrichtung möglich.

Vorteilhafte Weiterbildungen der Erfindung entnimmt man den abhängigen Patentansprüchen.

Ausführungsbeispiele der Erfindung werden anhand der Zeichnung näher erläutert.

Es zeigen
- Figur 1: eine Ansicht einer bekannten Positionsmeßeinrichtung,
- Figur 2: eine Schaltung der Positionsmeßeinrichtung nach Figur 1,
- Figur 3a und 3b: den Signalverlauf eines Abtastsignales bei verschiedenen Abtastabständen,
- Figur 4: eine schematische Darstellung des Sensors der Positionsmeßeinrichtung gemäß der Erfindung,
- Figur 5a: eine Anordnung von magnetoresistiven Elementen des Sensors,
- Figur 5b: eine Schaltung der Elemente nach Figur 5a,
- Figur 6: eine weitere Anordnung von magnetoresistiven Elementen des Sensors,
- Figur 7: eine Anordnung des Sensors zur Abtastung einer Referenzmarkenspur,
- Figur 8: eine Ausbildung des Sensors mit hochohmigen Zuleitungen,
- Figur 9a: eine Anordnung des Sensors, bei der die magnetoresistiven Elemente der Positionsmeßeinrichtung Verwendung finden,
- Figur 9b: eine Schaltung der Elemente nach Figur 9a,
- Figur 10: eine Sensoranordnung mit einer Gleichrichterschaltung,
- Figur 11a und 11b: vorteilhafte Positionen des Sensors auf der Abtasteinrichtung.

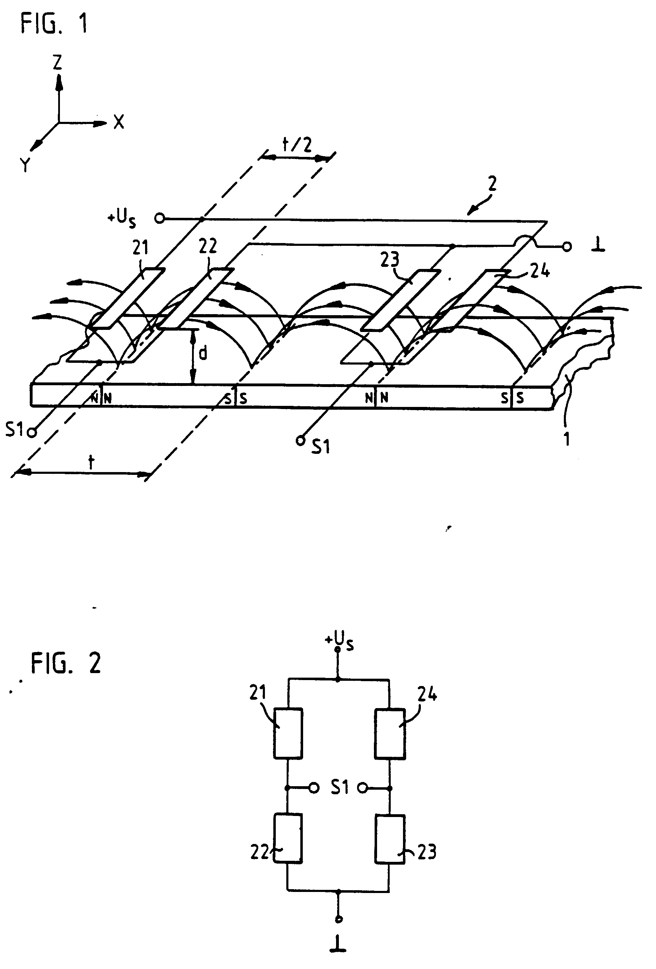

In Figur 1 ist schematisch eine Längenmeßeinrichtung gezeigt, bei der eine Meßteilung 1 eines Maßstabes aus einem magnetisierbaren Material von einer Abtasteinheit 2 mit mehreren magnetoresistiven Elementen 21, 22, 23, 24 abgetastet wird. Die Meßteilung 1 besteht aus in Meßrichtung X aufeinanderfolgenden gegenpolig magnetisierten Bereichen N und S, an deren Bereichsgrenzen zwei Nordpole NN bzw. Südpole SS aneinandergrenzen. Die Meßteilung 1 besitzt eine Teilungsperiode t, die durch den Polabstand zwischen Nord- und Südpol definiert ist.

Zur Erzeugung von positionsabhängigen Ausgangssignalen S1 wird die Meßteilung 1 in X-Richtung von den magnetoresistiven Elementen 21, 22, 23, 24 abgetastet. Diese Elemente 21, 22, 23, 24 bestehen aus Permalloy, dessen elektrischer Widerstand von der Stärke des magnetischen Feldes der Meßteilung 1 abhängig ist. Die Änderung des Widerstandes beträgt etwa 2%. Wegen dieser relativ geringen Widerstandsänderung und zur Kompensation einer Signaldrift aufgrund temperaturbedingter Widerstandsänderungen werden mehrere Elemente 21, 22, 23, 24 in Form einer Wheatstoneschen Brücke zusammengeschaltet. Gegenüberliegende Elemente 21, 24 bzw. 22, 23 haben dabei jeweils eine Phasendifferenz von einer halben Teilungsperiode t bzw. 180°. Diese Schaltung ist in Figur 2 gezeigt.

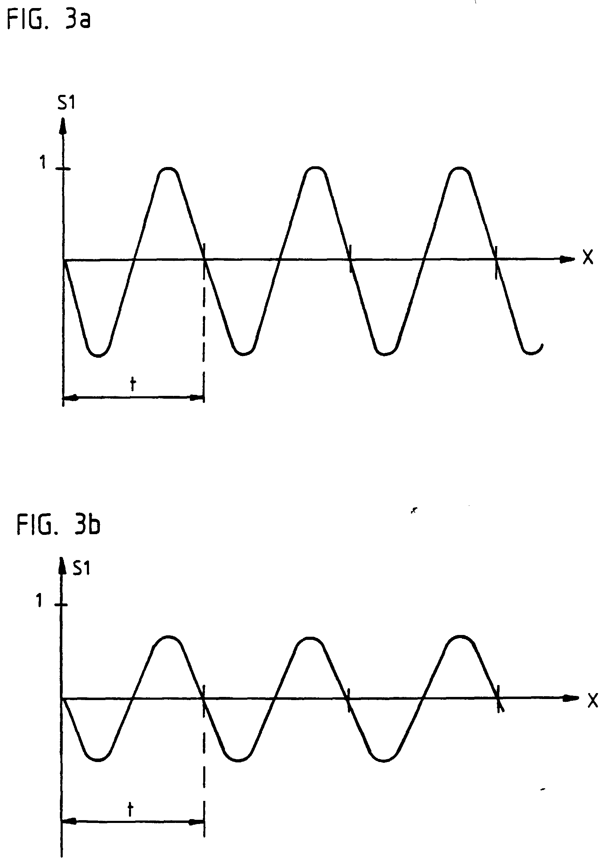

Die Meßteilung 1 ist beispielsweise an einem Bett einer Werkzeugmaschine oder einer Führung befestigt oder direkt dort aufgebracht. Die Abtasteinheit 2 befindet sich auf einem relativ zur Meßteilung 1 in X-Richtung beweglichen Schlitten. Bei der Relativbewegung dieser beiden Objekte gleitet die Abtasteinheit 2 auf der Meßteilung 1 bzw. auf dem Träger der Meßteilung 1. Durch Abrieb der Gleitelemente oder durch andere Einflüsse ändert sich aber in der Praxis trotzdem der Abstand d zwischen der Meßteilung 1 und der Abtasteinheit 2. Eine Änderung des Abstandes d in Z-Richtung verursacht aber auch eine Verringerung oder Vergrößerung der Widerstandsänderung in den magnetoresistiven Elementen 21, 22, 23, 24 bei der Abtastung der Meßteilung 1 in X-Richtung. Diese Abstandsänderung verursacht also auch eine Änderung der Signalamplitude der positionsabhängigen Abtastsignale S1. Diese Änderung der Signalamplitude ist in Figur 3 dargestellt. Der Signalverlauf des Abtastsignales S1 in Figur 3a ergibt sich bei einem optimalen konstanten Abstand d. Vergrößert sich dieser Abstand d, dann verringert sich die Signalamplitude, was in Figur 3b erkennbar ist.

Zur Regelung der Signalamplitude benötigt man daher eine analoge, temperaturkompensierte und störfeldunabhängige Regelgröße. Hierzu wird gemäß der Erfindung ein Sensor 3 vorgeschlagen, der am Ausgang ein von der Meßteilung 1 möglichst unmoduliertes Meßsignal Sd erzeugt, dessen Signalamplitude vom Abstand d zwischen der Abtasteinheit 2 und der Meßteilung 1 abhängig ist.

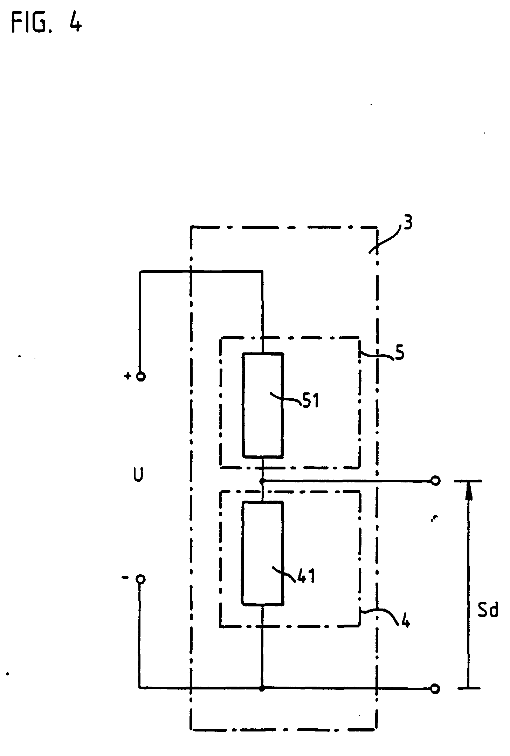

In Figur 4 ist schematisch ein derartiger Sensor 3 dargestellt. In diesem Fall besteht der Sensor 3 aus einer Spannungsteilerschaltung. Im aktiven Zweig 4 der Spannungsteilerschaltung ist ein magnetoresistives Element 41 angeordnet, dessen Widerstand sich in Abhängigkeit vom Abstand d ändert. Der Ergänzungszweig 5 der Spannungsteilerschaltung weist einen Widerstand 51 auf, dessen elektrischer Widerstand unabhängig vom Abstand d ist. Als abstandsabhängiges Meßsignal Sd wird die Spannung am aktiven Zweig 4 abgenommen.

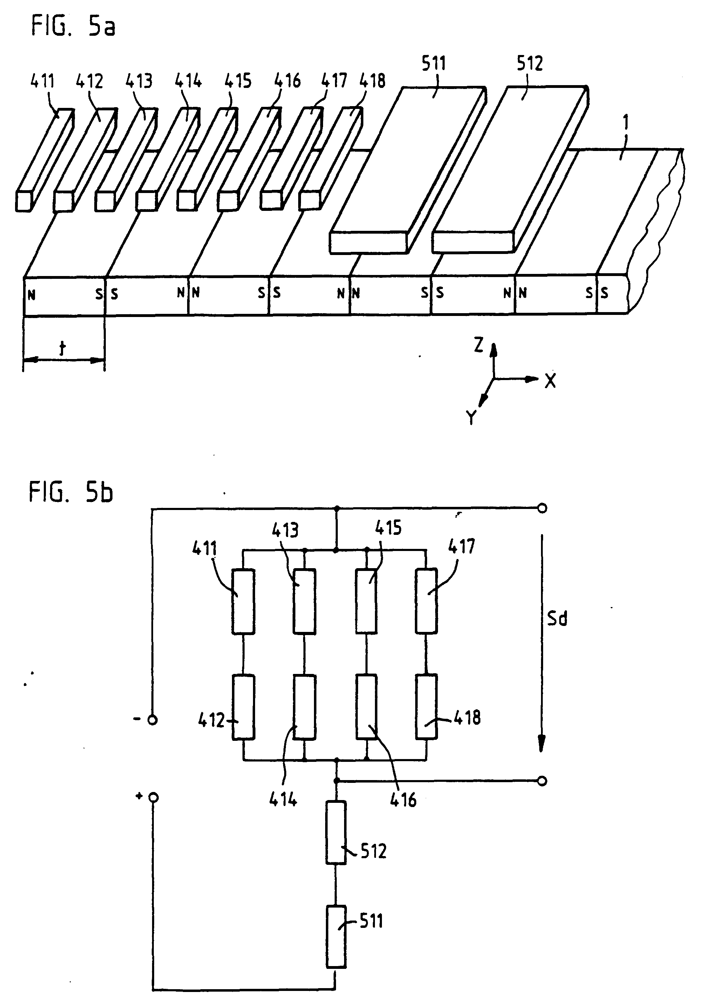

Besonders vorteilhaft ist es, wenn das abstandsabhängige Meßsignal Sd durch Abtastung der Meßteilung 1 gewonnen wird. In Figur 5 ist hierzu ein Ausführungsbeispiel gezeigt. Die magnetoresistiven Elemente 411 bis 418 des aktiven Zweiges 4 sind gegenüber der Meßteilung 1 angeordnet und tasten diese ab. Die Anordnung ist so gewählt, daß das sich ergebende Meßsignal Sd von der Meßteilung 1 möglichst nicht moduliert wird. Die Schaltung hierzu ist in Figur 5b dargestellt. Die Widerstände des Ergänzungszweiges 5 sind ebenfalls magnetoresistive Elemente 511, 512, welche wie die Elemente 411 bis 418 mit ihrer empfindlichen Längsachse in Y-Richtung angeordnet sind. Die Elemente 511, 512 sind derart dimensioniert, daß der Widerstand unabhängig vom Abstand d ist. Dies wird erreicht, indem die Elemente 511, 512 besonders breit ausgebildet werden. Im Beispiel beträgt die Teilungsperiode t der Meßteilung 200µm; die Maße der Elemente 411 bis 418 sind:
Dicke = 100nm; Breite = 25µm; Länge = 1,5mm
die Maße der Elemente 511, 512 sind:
Dicke = 100nm; Breite = 200µm; Länge = 3mm
Bei dieser Dimensionierung besitzen die Elemente 511, 512 gegenüber den Elementen 411 bis 418 eine höhere Empfindlichkeit und befinden sich daher im Arbeitsbereich in der magnetischen Sättigung. Als Arbeitsbereich ist der bei der Abtastung auftretende Abstand d definiert. Bei dem beschriebenen Beispiel ist der Gesamtwiderstand des aktiven Zweiges 4 gleich dem Gesamtwiderstand des Ergänzungszweiges 5. Die Elemente 411 bis 418 und 511, 512 sind aus dem gleichen Material Permalloy hergestellt, weshalb Temperaturänderungen keinen Einfluß auf das Meßsignal Sd haben.

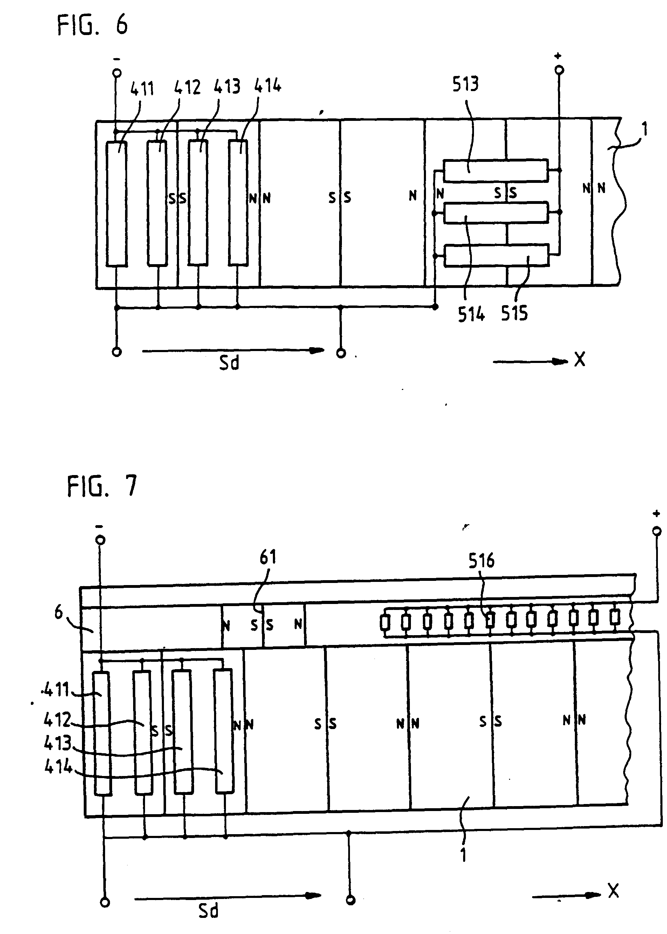

In Figur 6 ist ein weiteres Beispiel eines Sensors 3 dargestellt. Die magnetoresistiven Elemente 411, 412, 413, 414 des aktiven Zweiges 4 sind derart angeordnet, daß mehrere jeweils eine Teilungsperiode t der Meßteilung 1 abtasten. Alle Elemente 411 bis 414 sind parallel zueinander geschaltet. Das Meßsignal Sd ist daher kaum von der Meßteilung 1 moduliert. Im Ergänzungszweig 5 sind die magnetoresistiven Elemente 513, 514, 515 derart angeordnet, daß die Feldstärkenänderungen bei der Abtastung der Meßteilung 1 keine Widerstandsänderung der Elemente 513, 514, 515 verursacht. Die Längsachsen der magnetoresistiven Elemente 513, 514, 515 verlaufen in Meßrichtung X, also in der magnetisch unempfindlichen Richtung.

Damit im Ergänzungszweig keine abstandsabhängige Widerstandsänderung auftritt, können die magnetoresistiven Elemente auch örtlich von der Meßteilung getrennt angeordnet werden, beispielsweise auf der Rückseite des Trägers der Elemente des aktiven Zweiges. Bei inkrementalen Positionsmeßsystemen können die magnetoresistiven Elemente des Ergänzungszweiges zwischen einer Inkrementalspur und einer Referenzmarkenspur angeordnet werden. Bei absoluten Positionsmeßsystemen mit mehreren Spuren ist ebenfalls eine Anordnung zwischen zwei Spuren möglich. Die magnetoresistiven Elemente des Ergänzungszweiges können auch magnetisch isolierend gekapselt sein, so daß keine Magnetfelder einwirken können.

In Figur 7 ist ein vorteilhaftes Beispiel dargestellt, bei dem die magnetoresistiven Elemente 516 des Ergänzungszweiges 5 nicht gegenüber der Meßteilung 1, sondern gegenüber einer Referenzmarkenspur 6 angeordnet sind und diese abtasten. Im Ergänzungszweig 5 ist eine Vielzahl von magnetoresistiven Elementen 516 in Meßrichtung X beabstandet nebeneinander angeordnet und parallel miteinander verschaltet. Beim Überfahren der Referenzmarke 61 wirkt die magnetische Feldstärke der Referenzmarke 61 nur auf wenige Elemente 516 ein und bewirkt dort eine Widerstandsänderung. Durch die Parallelschaltung vieler Elemente 516 hat diese Widerstandsänderung aber keinen Einfluß auf den Gesamtwiderstand des Ergänzungszweiges 5. Wegen der Übersichtlichkeit wurde in Figur 7 nur ein Element 516 des Ergänzungszweiges 5 bezeichnet.

In nicht gezeigter Weise ist es auch möglich, daß die Anordnung der Elemente 513, 514, 515 des Ergänzungszweiges 5 nach Figur 6 gegenüber der Referenzmarkenspur 6 angeordnet ist und diese abtastet.

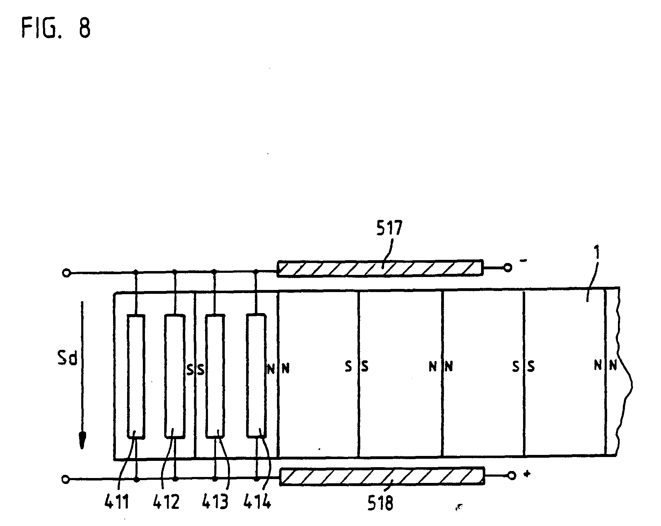

Anstelle der gezeigten magnetoresistiven Elemente 511 bis 516 im Ergänzungszweig 5 können auch andere resistive Elemente eingesetzt werden. Diese Elemensollten nur gleiches Temperaturverhalten wie die Elemente 411 bis 418 des aktiven Zweiges 4, jedoch keine Magnetempfindlichkeit aufweisen. Als Material würde sich z.B. Kupfer eignen. In Figur 8 ist ein derartiges Beispiel dargestellt, bei dem der Ergänzungszweig 5 durch hochohmige Zuleitungen 517, 518 ausgeführt ist. Diese Zuleitungen 517, 518 sind auf dem gleichen Träger wie die Elemente 411 bis 414 aufgebracht. Gleiches Temperaturverhalten bedeutet, daß sich die Widerstände bei Temperaturänderungen im gleichen Maße ändern.

Die bisher beschriebenen Ausführungsformen des Sensors 3 benötigen im aktiven Zweig 4 ein oder mehrere magnetoresistive Elemente 411 bis 418. Diese Elemente 411 bis 418 sind zusätzlich zu den magnetoresistiven Elementen 21 bis 24 zur Bildung von positionsabhängigen Abtastsignalen erforderlich. Gemäß einer Weiterbildung der Erfindung ist es möglich, die bereits vorhandenen magnetoresistiven Elemente 21 bis 24 der Positionsmeßeinrichtung zusätzlich für den aktiven Zweig 4 des Sensors 3 zu verwenden.

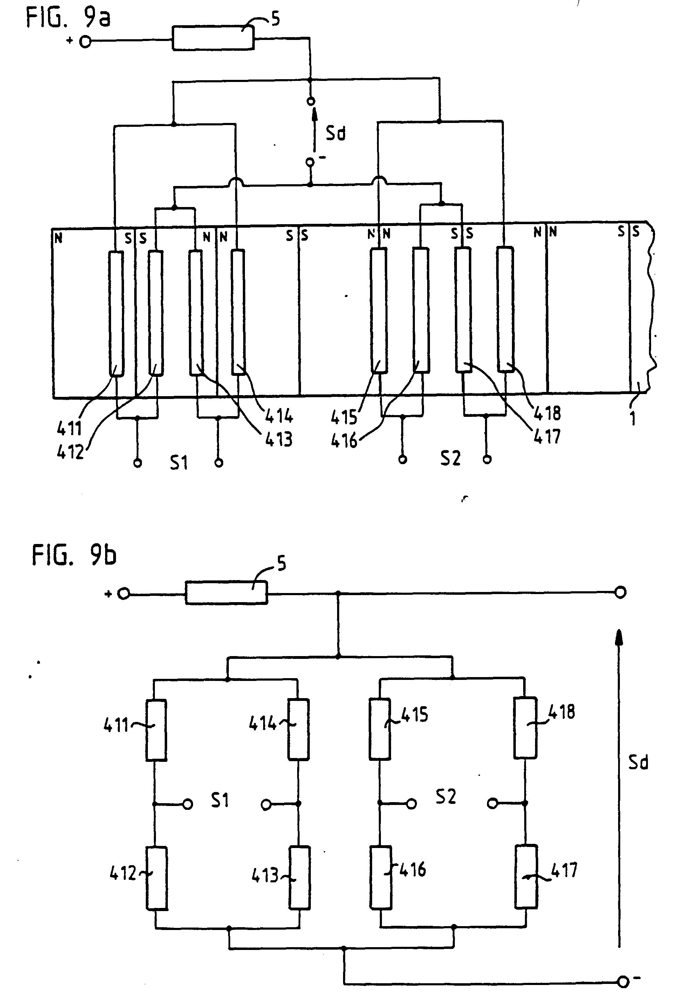

In den Figuren 9a und 9b ist hierzu ein Ausführungsbeispiel gezeigt. Die magnetoresistiven Elemente 411 bis 414 tasten die Meßteilung 1 ab. Sie sind zu einer Vollbrücke zusammengeschaltet und am Ausgang steht das sinusförmige Abtastsignal S1 an, dessen Amplitude die Position der Abtasteinheit 2 relativ zur Meßteilung 1 in Meßrichtung X definiert. Eine derartige Anordnung wurde bereits in Figur 1 und Figur 2 beschrieben. Bei inkrementalen Positionsmeßeinrichtungen muß zur Richtungserkennung ein um 90° phasenverschobenes Abtastsignal S2 zur Verfügung stehen. Hierzu ist eine weitere Vollbrücke mit den magnetoresistiven Elementen 415 bis 418 vorgesehen. Gemäß der Erfindung kann nun diese bereits vorhandene Anordnung für den aktiven Zweig 4 des Sensors 3 eingesetzt werden, indem die beiden Vollbrücken spannungsseitig parallel geschaltet werden und der Sensor mit einem bereits in den vorhergehenden Beispielen beschriebenen Ergänzungszweig 5 vervollständigt wird. Das abstandsabhängige Meßsignal Sd wird an der Parallelschaltung der beiden Vollbrücken abgenommen. Um ein besonders gut oberwellenfreies Meßsignal Sd zu erhalten, können auch mehrere Vollbrücken parallel geschaltet werden, wobei die einzelnen Vollbrücken gegeneinander phasenverschobene, bezogen auf die Meßrichtung X positionsabhängige Abtastsignale S1, S2 erzeugen.

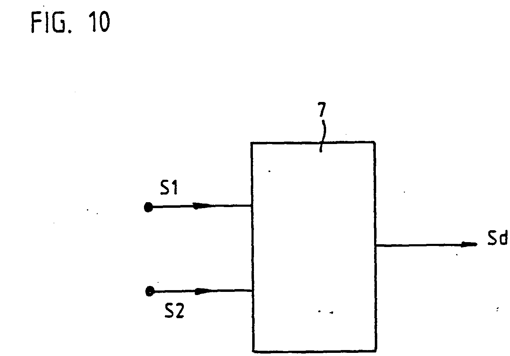

Eine weitere Möglichkeit zur Erzeugung eines abstandsabhängigen Meßsignales Sd ist in Figur 10 dargestellt. Die von der Positionsmeßeinrichtung erzeugten positionsabhängigen sinusförmigen Abtastsignale S1 und S2 werden einer Gleichrichterschaltung 7 des Sensors 3 zugeführt. Auch hier ist das Meßsignal Sd besonders oberwellenfrei, wenn mehrere Abtastsignale S1, S2 gleichgerichtet werden.

Die beschriebenen Spannungsteilerschaltungen haben den großen Vorteil, daß Temperaturänderungen keine Änderung des Meßsignales Sd verursachen. Wenn Änderungen des Meßsignales Sd aufgrund von Temperaturänderungen in Kauf genommen werden, dann kann bei den beschriebenen Anordnungen auf den Ergänzungszweig verzichtet werden und der aktive Zweig mit konstantem Strom gespeist werden. Die Spannung am aktiven Zweig ist das abstandsabhängige Meßsignal Sd.

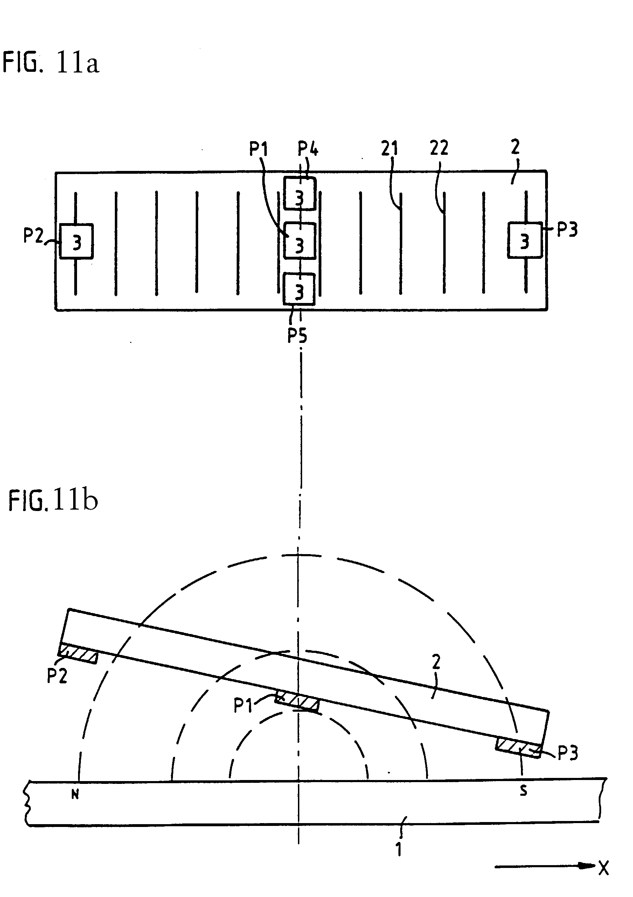

In den Figuren 11a und 11b ist gezeigt, an welchen Positionen P der Sensor 3 vorteilhaft auf der Abtasteinheit 2 relativ zu den magnetoresistiven Elementen 21, 22 der Positionsmeßeinrichtung angeordnet wird. Zur vereinfachten Darstellung wurden nur zwei der Elemente 21, 22 bezeichnet. Befindet sich der Sensor 3 an der Position P1 erhält man auch bei Verkippen der Abtasteinheit 2 ein richtiges Meßsignal Sd, das den mittleren Abstand d angibt. Ordnet man die einzelnen magnetoresistiven Elemente des aktiven Zweiges des Sensors 3 zum Teil auf Position P2 und P3 oder P2, P3 und P4, P5 an, dann erhält man ebenfalls ein richtiges Meßsignal Sd. Ein richtiges, den mittleren Abstand d definierendes Meßsignal Sd erhält man also dann, wenn der Flächenschwerpunkt der Elemente 41 des aktiven Zweiges 4 mit dem Flächenschwerpunkt der magnetoresistiven Elemente 21 bis 24 zusammenfällt.

Das abstandsabhängige Meßsignal Sd wird besonders vorteilhaft zur Regelung der Abtastsignale S1, S2 der Positionsmeßeinrichtung eingesetzt. Dies kann beispielsweise über einen Verstärker erfolgen, der die Signalamplitude der Abtastsignale S1, S2 (bezogen auf die Meßrichtung X) abhängig vom Meßsignal Sd verstärkt oder dadurch, indem die Speisespannung der magnetoresistiven Elemente 21 bis 24 variiert wird.

Eine weitere vorteilhafte Möglichkeit zur Regelung besteht darin, daß der Abstand d zwischen der Abtasteinheit 2 und der Meßteilung 1 abhängig vom Meßsignal Sd verändert wird. Dies kann dadurch erfolgen, indem man die Abtasteinheit mit einer Antriebseinheit verbindet und sie in Z-Richtung nachführt. Die Antriebseinheit kann eine Spulenanordnung oder ein Piezoelement sein, wie es bereits aus der EP 0 242 492 A bekannt ist.

Das Meßsignal Sd des Sensors gibt den Abstand zwischen der Abtasteinheit 2 und der Meßteilung 1 an. Mit dem Sensor wird somit auch ein Zweikoordinaten-Meßsystem geschaffen, mit dem eine gleichzeitige Messung in X- und Z-Richtung möglich wird.

Die Erfindung kann bei inkrementalen sowie absoluten Längen- und Winkelmeßeinrichtungen eingesetzt werden.

## Patentansprüche

1. Positionsmeßeinrichtung zur Messung der Relativlage zweier zueinander beweglicher Objekte längs eines Maßstabes, bei der eine Meßteilung (1) des Maßstabes von einer Abtasteinheit (2) mittels magnetoresistiver Elemente (21 bis 24) zur Erzeugung von positionsabhängigen Abtastsignalen (S1, S2) abgetastet wird, dadurch gekennzeichnet, daß die Abtasteinheit (2) einen Sensor (3) mit magnetoresistiven Elementen (41) zur Erfassung des Abstandes (d) zwischen der Abtasteinheit (2) und der Meßteilung (1) aufweist, daß weiterhin die magnetoresistiven Elemente (41) des Sensors (3) gegenüber der Meßteilung (1) angeordnet sind und zur Erfassung des Abstandes (d) die Meßteilung (1) abtastet, und derart räumlich gegenüber der Meßteilung (1) ausgerichtet und elektrisch miteinander verschaltet sind, daß am Ausgang des Sensors (3) ein von der Meßteilung (1) zumindest weitgehend unmoduliertes Meßsignal (Sd) ansteht, dessen Signalamplitude vom Abstand (d) zwischen der Abtasteinheit (2) und der Meßteilung (1) abhängig ist.

2. Positionsmeßeinrichtung nach Anspruch 1, dadurch gekennzeichnet, daß mehrere magnetoresistive Elemente (411 bis 418) zur Erfassung des Abstandes (d) jeweils eine Teilungsperiode (t) der Meßteilung (1) abtasten, und daß mehrere dieser magnetoresistiven Elemente (411 bis 418) zueinander parallel geschaltet sind, und das abstandsabhängige Meßsignal (Sd) am Ausgang dieser Parallelschaltung ansteht.

3. Positionsmeßeinrichtung nach Anspruch 1 oder 2, dadurch gekennzeichnet, daß die magnetoresistiven Elemente (411 bis 418) des Sensors (3) die magnetoresistiven Elemente (411 bis 418) zur Erzeugung der positionsabhängigen Abtastsignale (S1, S2) längs des Maßstabes sind.

4. Positionsmeßeinrichtung nach Anspruch 3, dadurch gekennzeichnet, daß mehrere magnetoresistive Elemente (411 bis 418) jeweils zu einer Vollbrücke zusammengeschaltet sind, und daß mehrere dieser Vollbrücken zueinander parallel geschaltet sind, wobei die Vollbrücken gegeneinander phasenverschobene Abtastsignale (S1, S2) erzeugen, und daß das abstandsabhängige Meßsignal (Sd) am Ausgang dieser Parallelschaltung ansteht.

5. Positionsmeßeinrichtung nach Anspruch 3, dadurch gekennzeichnet, daß mehrere positionsabhängige Abtastsignale (S1, S2) einer Gleichrichterschaltung (7) zugeführt werden, und daß das abstandsabhängige Meßsignal (Sd) am Ausgang der Gleichrichterschaltung (7) ansteht.

6. Positionsmeßeinrichtung nach einem der Ansprüche 1 bis 5, dadurch gekennzeichnet, daß der Sensor (3) aus einer Spannungsteilerschaltung besteht, wobei in einem aktiven Zweig (4) zumindest ein magnetoresistives Element (41) geschaltet ist, dessen Widerstand sich abhängig vom Abstand (d) zwischen der Abtasteinheit (2) und der Meßteilung (1) ändert, und die Spannungsteilerschaltung im anderen Ergänzungszweig (5) zumindest ein resistives Element (51) aufweist, dessen Widerstand unabhängig vom Abstand (d) zwischen der Abtasteinheit (2) und der Meßteilung (1) ist, und daß als abstandsabhängiges Meßsignal die Spannung (Sd) am aktiven Zweig (4) abgenommen wird.

7. Positionsmeßeinrichtung nach Anspruch 6, dadurch gekennzeichnet, daß die magnetoresistiven Elemente (511 bis 515) des Ergänzungszweiges (5) gegenüber der Meßteilung (1) angeordnet sind und diese abtasten, wobei die magnetoresistiven Elemente (511 bis 515) derart dimensioniert undloder angeordnet sind, daß keine Widerstandsänderung in Abhängigkeit vom Abstand (d) zur Meßteilung (1) auftritt.

8. Positionsmeßeinrichtung nach Anspruch 7, dadurch gekennzeichnet, daß die Längsachsen der magnetoresistiven Elemente (513 bis 515) des Ergänzungszweiges (5) in Meßrichtung X verlaufend angeordnet sind.

9. Positionsmeßeinrichtung nach Anspruch 7, dadurch gekennzeichnet, daß die magnetoresistiven Elemente (511, 512) des Ergänzungszweiges (5) eine große magnetische Empfindlichkeit aufweisen und sich im Arbeitsbereich in der magnetischen Sättigung befinden.

10. Positionsmeßeinrichtung nach Anspruch 6, dadurch gekennzeichnet, daß die magnetoresistiven Elemente (516) des Ergänzungszweiges (5) örtlich von der Meßteilung (1) getrennt angeordnet sind, so daß das magnetische Feld der Meßteilung (1) nicht auf diese Elemente (516) einwirken kann.

11. Positionsmeßeinrichtung nach Anspruch 10, dadurch gekennzeichnet, daß mehrere magnetoresistive Elemente (516) des Ergänzungszweiges (5) gegenüber einer Referenzmarkenspur (6) mit einer Referenzmarke (61) angeordnet sind und diese abtasten.

12. Positionsmeßeinrichtung nach einem der Ansprüche 6 bis 11, dadurch gekennzeichnet, daß das zumindest eine resistive Element (517, 518) des Ergänzungszweiges (5) aus einem Material besteht, welches das gleiche Temperaturverhalten wie das zumindest eine magnetoresisitve Element (411 bis 414) des aktiven Zweiges (4) aufweist, jedoch keine Empfindlichkeit gegenüber magnetischer Felder besitzt.

13. Positionsmeßeinrichtung nach Anspruch 12, dadurch gekennzeichnet, daß das resistive Element von den elektrischen Anschlußleitungen (517, 518) gebildet wird.

14. Positionsmeßeinrichtung nach Anspruch 1, dadurch gekennzeichnet, daß der Sensor (3) zur Erfassung des Abstandes (d) im Flächenschwerpunkt der Anordnung der magnetoresistven Elemente (21 bis 24) liegt, die zur Bestimmung der Position längs des Maßstabes dienen.

15. Positionsmeßeinrichtung nach einem der vorhergehenden Ansprüche 1 bis 14, dadurch gekennzeichnet, daß die Amplitude der positionsabhängigen Abtastsignale (S1, S2) geregelt wird, indem das abstandsabhängige Ausgangssignal (Sd) des Sensors (3) einer Antriebseinheit zugeführt wird, mit der der Abstand (d) zwischen der Abtasteinheit (2) und der Meßteilung (1) veränderbar ist.

## Claims

1. A position measuring device for measuring the relative position between two objects movable relative to one another along a measuring scale, in which a measuring graduation (1) of the measuring scale is sensed by a sensing unit (2) by means of magneto-resistive elements (21 to 24) for generating position dependent sensing signals (S1, S2), characterized in that the sensing unit (2) has a sensor (3) with magneto-resistive elements (41) for detecting the distance (d) between the sensing unit (2) and the measuring scale (1), in that furthermore the magneto-resistive elements (41) ofthe sensor (3) are arranged opposite the measuring scale (1) and the measuring scale (1) is sensed to detect the distance (d) and are so aligned relative to the measuring scale (1) and electrically connected to one another that a measuring signal (Sd) which is at least mainly unmodulated by the measuring scale (1) is present at the output ofthe sensor (3), its signal amplitude being dependent on the distance (d) between the sensing unit (2) and the measuring scale (1).

2. A position measuring device according to claim 1, characterized in that a plurality of magneto-resistive elements (411 to 418) each sense one graduation period (t) of the measuring scale (1) to detect the distance (d), and in that a plurality of these magneto-resistive elements (411 to 418) are connected together in parallel, and the distance dependent measuring signal (Sd) is present at the output of this parallel circuit.

3. A position measuring device according to claim 1 or 2, characterized in that the magneto-resistive elements (411 to 418) of the sensor (3) are along the measuring scale for generating the position dependent sensing signals (S1, S2).

4. A position measuring device according to claim 3, characterized in that pluralities of magneto-resistive elements (411 to 418) are each connected in a full bridge and in that a plurality of these full bridges are connected together in parallel, wherein the full bridges generate sensing signals (S1, S2) phase displaced relative to one another, and in that the distance dependent measuring signal (Sd) is present at the output of this parallel circuit.

5. A position measuring device according to claim 3, characterized in that a plurality of position dependent measuring signals (S1, S2) are applied to a rectifier circuit (7) and in that the distance dependent measuring signal (Sd) is present at the output of the rectifier circuit.

6. A position measuring device according to any of claims 1 to 5, characterized in that the sensor (3) consists of a voltage divided circuit, wherein at least one magneto-resistive element (41) is connected in an active branch (4), its resistance being dependent on the distance (d) between the sensing unit (2) and the measuring scale (1), and the voltage divided circuit comprises at least one resistive element (51) in another extension branch (5), its resistance being independent ofthe distance (d) between the sensing unit (2) and the measuring scale (1), and in that the voltage (Sd) on the active branch (4) is taken as the distance dependent measuring signal.

7. A position measuring device according to claim 6, characterized in that the magneto-resistive elements (511 to 515) or the extension branch (5) are arranged opposite the measuring scale (1) and sense this, wherein the magneto-resistive elements (511 to 515) are so dimensioned and/or arranged that no change in resistance occurs in dependence on the distance (d) from the measuring scale (1).

8. A position measuring device according to claim 7, characterized in that the longitudinal axes of the magneto-resistive elements (513 to 515) ofthe extension branch (5) run in the measuring direction X.

9. A position measuring device according to claim 7, characterized in that the magneto-resistive elements (511, 512) ofthe extension branch have high magnetic sensitivity and are located in the working region of magnetic saturation.

10. A position measuring device according to claim 6, characterized in that the magneto-resistive elements (516) of the extension branch (5) are spatially remote from the measuring scale (1), so that the magnetic field ofthe measuring scale (1) cannot act on these elements (516).

11. A position measuring device according to claim 10, characterized in that a plurality of magneto-resistive elements (516) of the extension branch (5) are arranged opposite a reference mark track (6) with a reference mark (61) and sense this.

12. A position measuring device according to any of claims 6 to 11, characterized in that at least one resistive element (517, 518) of the extension branch (5) consists of a material which has the same temperature properties as the at least one magneto-resistive element (411 to 414) of the active branch (4) but is not sensitive to magnetic fields.

13. A position measuring device according to claim 12, characterized in that the resistive element is formed by the electrical terminal connections (517, 518).

14. A position measuring device according to claim 1, characterized in that the sensor (3) for detecting the distance (d) lies in the areal centroid of the arrangement of magneto-resistive elements (21 to 24) which serve to determine the position along the measuring scale.

15. A position measuring device according to any of the preceding claims 1 to 14, characterized in that the amplitude of the position dependent sensing signals (S1, S2) is regulated in that the distance dependent output signal (Sd) of the sensor (3) is applied to a drive unit, with which the distance (d) between the sensing unit (2) and the magneto-resistive scale (1) can be adjusted.

## Revendications

1. Dispositif de mesure de position pour mesurer la position relative de deux objets mobiles l'un par rapport à l'autre le long d'une règle graduée, dans lequel une graduation de mesure (1) de la règle graduée est palpée par une unité de palpage (2), à l'aide d'éléments magnéto-résistifs (21 à 24) aux fins de former des signaux de palpage (S1,S2) dépendants de la position, caractérisé par le fait que l'unité de palpage (2) comporte un détecteur (3) avec des éléments (41) magnéto-résistifs pour déterminer la distance (d) entre l'unité de palpage (2) et la graduation de mesure (1), par le fait que les éléments magnéto-résistifs (41) du détecteur (3) sont disposés en regard de la graduation de mesure (1), palpent la graduation de mesure (1) pour déterminer la distance (d) et sont orientés dans l'espace par rapport à la graduation de mesure (1) et connectés électriquement les uns aux autres de manière à disposer, à la sortie du détecteur (3), d'un signal de mesure (Sd) qui, dans une large mesure au moins, n'est pas modulé par la graduation de mesure (1) et dont l'amplitude de signal dépend de la distance (d) entre l'unité de palpage (2) et la graduation de mesure (1).

2. Dispositif de mesure de position selon la revendication 1, caractérisé par le fait que, pour déterminer la distance (d), plusieurs éléments (411 à 418) magnéto-résistifs palpent chacun une période (t) de graduation de la graduation de mesure (1) et par le fait que plusieurs de ces éléments (411 à 418) magnéto-résistifs sont connectés en parallèle les uns avec les autres et que le signal de mesure (Sd) dépendant de la distance est disponible à la sortie de ce branchement parallèle.

3. Dispositif de mesure de position selon la revendication 1 ou 2, caractérisé par le fait que les éléments (411 à 418) magnéto-résistifs du détecteur (3) sont les éléments (411 à 418) magnéto-résistifs qui servent à produire les signaux de palpage (S1,S2) dépendant de la position le long de la règle graduée.

4. Dispositif de mesure de position selon la revendication 3, caractérisé par le fait que plusieurs éléments (411 à 418) magnéto-résistifs sont connectés les uns avec les autres pour former chaque fois un pont complet et par le fait que plusieurs de ces ponts complets sont branchés en parallèle les uns avec les autres, les ponts complets produisant des signaux de palpage (S1,S2) mutuellement déphasés, et que le signal de mesure (Sd) dépendant de la distance est disponible à la sortie de ce branchement parallèle.

5. Dispositif de mesure de position selon la revendication 3, caractérisé par le fait que plusieurs signaux de palpage (S1,S2) dépendant de la position sont envoyés à un circuit redresseur (7) et par le fait que le signal de mesure (Sd) dépendant de la position est disponible à la sortie du circuit redresseur (7).

6. Dispositif de mesure de position selon l'une des revendications 1 à 5, caractérisé par le fait que le détecteur (3) se compose d'un circuit diviseur de tension, au moins un élément (41) magnéto-résistif dont la résistance varie en fonction de la distance (d) entre l'unité de palpage (2) et la graduation de mesure (1) étant inséré dans une branche (4) active et le circuit diviseur de tension dans l'autre branche (5) complémentaire comportant au moins un élément (51) résistif dont la résistance est indépendante de la distance (d) entre l'unité de palpage (2) et la graduation de mesure (1), et par le fait que l'on prélève, comme signal de mesure dépendant de la distance, la tension (Sd) aux bornes de la branche (4) active.

7. Dispositif de mesure selon la revendication 6, caractérisé par le fait que les éléments (511 à 515) magnéto-résistifs de la branche (5) complémentaire sont disposés en regard de la graduation de mesure (1) et palpent cette dernière, les éléments (511 à 515) magnéto-résistifs étant dimensionnés et/ou disposés de telle sorte qu'il n'y ait pas de variation de la résistance en fonction de la distance (d) par rapport à la graduation de mesure (1).

8. Dispositif de mesure selon la revendication 7, caractérisé par le fait que les axes longitudinaux des éléments (513 à 515) magnéto-résistifs de la branche (5) complémentaire s'étendent dans la direction de mesure (X).

9. Dispositif de mesure selon la revendication 7, caractérisé par le fait que les éléments (511,512) magnéto-résistifs de la branche (5) complémentaire présentent une sensibilité magnétique élevée et se situent, à l'intérieur de la plage de fonctionnement, dans la saturation magnétique.

10. Dispositif de mesure selon la revendication 6, caractérisé par le fait que les éléments (516) magnéto-résistifs de la branche (5) complémentaire sont disposés en dehors de la graduation de mesure, de telle sorte que le champ magnétique de la graduation de mesure (1) ne peut pas influer sur ces éléments (516).

11. Dispositif de mesure selon la revendication 10, caractérisé par le fait que plusieurs éléments (516) magnéto-résistifs de la branche (5) complémentaire sont disposés en regard d'une piste (6) de repères de référence comportant un repère de référence (61) et palpent celle-ci.

12. Dispositif de mesure selon l'une des revendications 6 à 11, caractérisé par le fait qu'au moins un élément (517,518) résistif de la branche (5) complémentaire est réalisé en un matériau qui présente le même comportement thermique que l'élément (411 à 414) magnéto-résistif, au nombre d'au moins un de la branche active (4) mais n'est pas sensible aux champs magnétiques.

13. Dispositif de mesure selon la revendication 12, caractérisé par le fait que l'élément résistif est formé par les lignes (517,5187) de connexion électrique.

14. Dispositif de mesure selon la revendication 1, caractérisé par le fait que le détecteur (3) pour déterminer la distance (d) est disposé au centre de la surface de l'agencement d'éléments (21 à 24) magnéto-résistifs servant à déterminer la position le long de la règle graduée.

15. Dispositif de mesure selon l'une des revendications précédentes 1 à 14, caractérisé par le fait que l'amplitude des signaux de palpage (S1,S2) dépendants de la position est régulée en transmettant le signal de sortie (Sd) dépendant de la position du détecteur à une unité d'entraînement, à l'aide de laquelle la distance (d) entre l'unité de palpage (2) et la graduation de mesure (1) peut être modifiée.
